# FASCICULE DE BREVET EUROPEEN

(11) **EP 2 390 179 B1**
(45) Date de publication et mention de la délivrance du brevet: **28.11.2012**
(21) Numéro de dépôt: 11166055.1
(22) Date de dépôt: 13.05.2011
(51) Int. Cl.: B64C 25/40

(54) **Aéronef comprenant un moteur de train**
Luftfahrzeug mit einem motorisierten Fahrwerk
Aircraft with a motorized landing gear

(30) Priorité: 26.05.2010 FR 1002222
(43) Date de publication de la demande: 30.11.2011
(73) Titulaire: Airbus Operations (S.A.S.), 31000 Toulouse (FR); Airbus (S.A.S.), 31707 Blagnac (FR); Airbus Operations Limited, Filton Bristol BS99 7AR (GB)
(72) Inventeur: Cros, Christophe, 31240 L'Union (FR); Brousse, Pierre Henri, 31520 Ramonville Saint Agne (FR); Bedarrides, Jeremy, 31000 Toulouse (FR)
(74) Mandataire: Potdevin, Emmanuel Eric

(56) Documents cités:
- WO-A1-95/29094
- WO-A1-2009/151622
- FR-A1- 2 930 759
- FR-A1- 2 930 760

## Description

L'invention concerne les aéronefs et en particulier leur évolution au sol, au roulage notamment entre une piste de décollage et d'atterrissage et un point de stationnement au voisinage d'un aérogare.

De façon usuelle, lors de leurs déplacements au sol, soit les aéronefs utilisent leurs moteurs principaux, soit ils sont tractés par des véhicules qui leur transmettent une poussée au niveau d'un train d'atterrissage. C'est en particulier le cas pour les aéronefs commerciaux utilisant comme moteurs principaux des turboréacteurs ou des turbopropulseurs. Mais l'utilisation des propulseurs principaux au roulage se traduit par une consommation de carburant et une pollution associées significatives. Et le recours à un véhicule tracteur spécialisé limite l'autonomie de déplacement de l'aéronef au sol.

On a proposé, notamment dans les documents FR-2 930 759 et FR-2 930 760, de disposer des moteurs au niveau de certains trains de roues, de manière à conférer à l'aéronef une autonomie de roulage. Il s'agit par exemple d'une micro-turbine installée au niveau d'un train. Toutefois, ces dispositifs sont complexes et nécessitent une amenée de carburant ou d'air pressurisé jusqu'au train, ce qui ajoute des canalisations et est donc susceptible de se traduire en coûts de fabrication et en masse supplémentaire pour l'aéronef.

On a aussi proposé de doter le train de roues d'un moteur électrique alimenté par le générateur auxiliaire de puissance (APU) de l'aéronef.

Mais la puissance nécessaire pour mouvoir au sol un aéronef est généralement de l'ordre de grandeur de la puissance électrique disponible à partir de l'APU pour les autres systèmes utilisateurs de puissance au sol. Il s'ensuit que les dimensions et la capacité de l'APU doivent être augmentées de façon très significative, tout comme sa masse. Une part importante du gain de consommation en carburant est alors annulée par cette masse supplémentaire.

En outre, le transport d'un tel niveau de puissance électrique vers le train de roues nécessite l'installation d'une ligne de puissance dédiée, qui contribue également à complexifier la conception de l'appareil et à alourdir ce dernier.

Un autre inconvénient de cette solution concerne l'alimentation en puissance hydraulique ou électrique des systèmes nécessaires au roulage de l'aéronef et à la préparation de la phase de vol prévue. Aujourd'hui, l'APU n'est pas conçue pour assurer l'ensemble des besoins de l'avion de façon nominale. Une méthode envisagée pour lui permettre d'alimenter le moteur du train de roues consiste à la relier à l'ensemble du réseau d'énergie de l'aéronef. L'APU peut ainsi fournir à chaque dispositif consommateur la puissance nécessaire pendant les phases de roulage. Mais cela entraîne aussi une complexification et un alourdissement significatif de l'aéronef.

On peut aussi envisager de définir deux phases indépendantes de roulage. Une première phase utilise uniquement les moteurs de roues alimentés en puissance par l'APU et forme une simple phase de transfert de l'aéronef depuis l'aérogare jusqu'à proximité de la piste d'envol. Cette phase serait opérée après une vérification minimale de la préparation de l'aéronef et avec des conditions de confort potentiellement dégradées pour les passagers. La seconde phase, peu de temps avant le décollage, serait opérée seulement avec les propulseurs. Elle permettrait de préparer l'aéronef pour effectuer notamment les vérifications habituelles (« check-lists ») et de mettre les passagers dans des conditions de confort et de sécurité appropriées pour le vol avec par exemple la lecture des consignes de sécurité. Mais cette méthode pose des difficultés opérationnelles difficilement acceptables pour une compagnie aérienne. Notamment, en cas d'anomalie détectée peu avant le décollage, l'aéronef devrait retourner à l'aérogare afin de pouvoir résoudre le problème.

Un but de l'invention est d'améliorer le roulage des aéronefs au sol.

A cet effet, on prévoit selon l'invention un aéronef qui comprend :
- au moins un moteur apte à propulser l'aéronef en vol ;
- au moins un moteur de train d'atterrissage ; et
- des moyens automatisés agencés pour commander de faire rouler l'aéronef directement au moyen du moteur de propulsion en vol et d'utiliser simultanément pour le roulage le moteur de train, durant une phase autre qu'une phase de décollage ou d'atterrissage.

Il s'agit donc d'une utilisation que l'on peut qualifier de « hybride » ou de combinée d'un dispositif d'entraînement d'au moins une roue de train et d'un ou plusieurs moteurs principaux de l'aéronef.

Avantageusement, les moyens automatisés sont agencés pour commander un freinage par le moteur de train lors du roulage.

En effet, lorsque la masse de l'aéronef est suffisamment éloignée de la masse maximale autorisée, la poussée des moteurs principaux, par exemple au ralenti, suffit généralement pour que l'aéronef accélère de manière continue. Dans une telle circonstance, le pilote est classiquement obligé d'utiliser les freins pour contrôler la vitesse de roulage. Cela se traduit par une usure prématurée des freins, phénomène qui est particulièrement sensible pour les freins en carbone dans lesquels l'usure provient davantage du nombre d'applications que de l'énergie dissipée. Grâce à la caractéristique précitée, les moteurs de roues peuvent être utilisés comme générateurs et ainsi assurer une fonction de freinage retenant l'aéronef à une certaine vitesse choisie par le pilote. De cette façon, la vitesse reste constante et le pilote n'a pas à appliquer plusieurs séries de freinages au moyen des organes dédiés à cette fonction, limitant ainsi l'usure de ces derniers. L'énergie absorbée par les moteurs de roues peut être dissipée ou, mieux, servir à alimenter un réseau électrique de l'aéronef, le moteur servant alors aussi de générateur de courant.

Avantageusement, les moyens automatisés sont agencés pour commander le roulage directement et simultanément au moyen du moteur de propulsion en vol et du moteur de train.

Ainsi, il s'agit d'un roulage hybride effectué à la fois au moyen du moteur de propulsion en vol, fonctionnant par exemple par combustion de carburant tel que du kérosène, et par le moteur de train alimenté de préférence par énergie électrique ou hydraulique. Dans une telle configuration, la génération de puissance par l'APU pour le moteur de train peut être secondée voir remplacée par celle qui a lieu au niveau du générateur du moteur de propulsion en vol. La puissance ainsi libérée au niveau de l'APU lui permet d'assurer l'intégralité des fonctions par ailleurs nécessaires au roulage et à la préparation du vol sans qu'il faille augmenter sa capacité. On peut ainsi mettre en oeuvre l'invention sans augmenter de façon significative la complexité et la masse des systèmes de l'aéronef comme il le faudrait dans le cas où l'APU devrait fournir toute la puissance alimentant le moteur de train. La seule masse additionnelle significative de l'aéronef provient des moteurs de roues. Certes, en contrepartie, un ou plusieurs des moteurs principaux étant allumé, une partie des gains en consommation de carburant associés au roulage au moyen du seul moteur de train se trouve perdue. Mais cette perte est en fait minime car on peut mettre en oeuvre le procédé tout en limitant la consommation des moteurs principaux au roulage et ainsi préserver un gain en consommation significatif à leur niveau. On peut prévoir que ce roulage hybride est mis en oeuvre avec le ou les moteurs de propulsion en vol fonctionnant au ralenti.

Avantageusement, les moyens automatisés sont agencés pour commander le roulage au moyen d'au moins deux moteurs de propulsion en vol.

Dans ce mode, la poussée fournie par les moteurs de propulsion en vol, par exemple au ralenti, est significative et permet d'assurer la plus grande partie de l'accélération de l'aéronef, y compris si la masse de ce dernier est élevée.

De préférence, les moyens automatisés sont agencés pour commander que les moteurs de propulsion en vol fournissent une puissance pour le roulage supérieure à celle fournie par le moteur de train.

Ainsi, le moteur de train ne fait qu'apporter un complément de puissance pendant les phases de mise en mouvement et d'accélération, les moteurs principaux de l'aéronef pouvant par exemple rester au ralenti pendant toute l'opération de roulage.

On peut prévoir que les moyens automatisés sont agencés pour commander de garder constante la puissance fournie pour le roulage par le ou les moteurs de propulsion en vol.

On peut alors prévoir que les moyens automatisés sont agencés pour commander de garder constante cette puissance tout en commandant d'augmenter la puissance fournie pour le roulage par les moteurs de train.

Le supplément de puissance est donc alors fourni par ces derniers lorsque cela est nécessaire.

On peut aussi prévoir que les moyens automatisés sont agencés pour commander de garder constante la puissance fournie pour le roulage par le ou les moteurs de train.

On peut alors prévoir que les moyens automatisés sont agencés pour commander de garder constante cette puissance tout en commandant d'augmenter la puissance fournie pour le roulage par les moteurs de propulsion en vol.Une telle augmentation aura lieu de préférence uniquement dans le cas de conditions exceptionnelles où les moyens automatisés solliciteront en complément une poussée additionnelle des moteur de propulsion en vol.

En effet, de manière à limiter l'impact de l'invention en termes de masse sur l'aéronef, on préfère dimensionner les moteurs de roues pour qu'ils fonctionnent en conditions nominales : peu de pente, vent moyen, conditions de roulage classiques. Les moteurs de propulsion en vol fonctionnent alors par exemple au ralenti. Lorsque l'aéronef opère dans des conditions trop éloignées de ces conditions nominales, on sollicite davantage les moteurs principaux afin qu'ils fonctionnent à un régime supérieur à celui du ralenti. De telles circonstances étant toutefois exceptionnelles, le bénéfice global du système reste supérieur au cas où les moteurs de roues sont eux aussi dimensionnés pour faire face à de telles circonstances exceptionnelles. A titre d'exemple, les pentes rencontrées sur les taxiways d'aéroport sont relativement faibles, de l'ordre de 0,5 à 1 %. Dans des cas très limités et de manière ponctuelle sur l'infrastructure, les pentes peuvent atteindre 1,5 % voire plus. Uniquement dans ce type de cas, on prévoit d'augmenter la poussée fournie par les moteurs de propulsion de vol afin de faire rouler l'aéronef. Le couple fourni par le moteur de roues reste donc limité ainsi que leur masse par conséquent.

Avantageusement, l'aéronef comprend au moins deux moteurs de propulsion en vol et les moyens automatisés sont agencés pour commander le roulage directement et simultanément au moyen d'un seul de ces moteurs et du moteur de train.

Ce mode nécessite un ou plusieurs moteurs de train plus puissants que dans le précédent mode, mais il permet une réduction plus importante de la consommation de carburant au niveau des moteurs de propulsion en vol.

Dans un mode de réalisation, l'aéronef comprend seulement deux moteurs de propulsion en vol.

Avantageusement, les moyens automatisés sont agencés pour commander une alimentation du moteur de train, de préférence principalement voire exclusivement, par un générateur de courant du moteur de propulsion en vol.

Avantageusement, l'aéronef comprend un organe de commande manuelle commun apte à commander le moteur de propulsion en vol et le moteur de train simultanément lors du roulage.

Il peut s'agir de la commande de l'accélération de l'aéronef ou bien de la commande de son freinage. Il peut aussi s'agir indifféremment de la commande d'accélération et de freinage.

On prévoit également selon l'invention un procédé pour faire rouler un aéronef, dans lequel on fait rouler l'aéronef, hors d'une piste de décollage et/ou d'atterrissage, directement au moyen d'au moins un moteur de l'aéronef apte à propulser l'aéronef en vol et en utilisant simultanément pour le roulage au moins un moteur d'un train d'atterrissage de l'aéronef.

De préférence, on fait rouler l'aéronef uniquement grâce à des moyens situés à bord de l'aéronef. On se dispense donc de tout véhicule tracteur extérieur.

On prévoit également selon l'invention un programme d'ordinateur comprenant des instructions de code aptes à commander l'exécution d'un procédé selon l'invention lorsqu'il est exécuté sur un ordinateur.

On prévoit aussi selon l'invention un support d'enregistrement de données comprenant un tel programme sous forme enregistrée.

On prévoit enfin selon l'invention la mise à disposition d'un tel programme sur un réseau de télécommunication en vue de son téléchargement.

D'autres caractéristiques et avantages de l'invention apparaîtront encore dans la description suivante de deux modes de réalisation donnés à titre d'exemples non limitatifs en référence aux dessins annexés sur lesquels :
- la figure 1 est une vue de face d'un aéronef selon un premier mode de réalisation de l'invention ;
- la figure 2 est une vue schématique montrant certains des organes de l'aéronef de la figure 1 ;
- la figure 3 est une vue en plan d'une zone aéroportuaire illustrant des déplacements au sol de l'aéronef de la figure 1 ; et
- la figure 4 est une vue analogue à la figure 1 illustrant un deuxième mode de réalisation de l'aéronef.

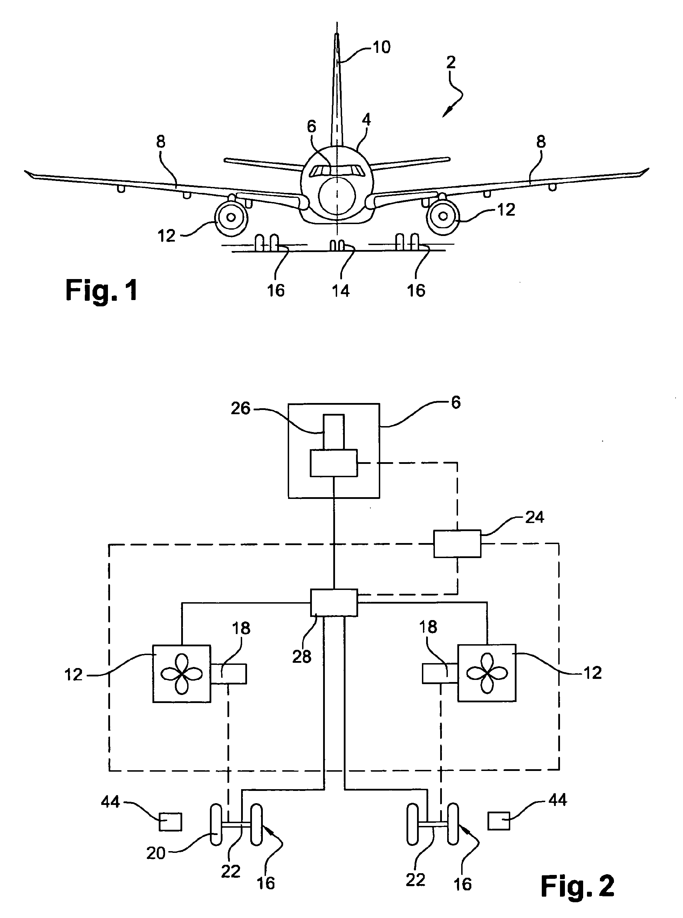

Un premier mode de réalisation d'un aéronef 2 selon l'invention a été illustré aux figures 1 et 2.

L'aéronef 2 est ici un aérodyne et, en l'espèce, un avion. Il s'agit en l'espèce d'un avion à usage commercial pour le transport de fret et /ou de passagers. Il est apte à accueillir au moins une personne. Il comprend un fuselage 4, à l'avant duquel se trouve un poste de pilotage 6 de l'avion. Il comprend deux ailes 8 s'étendant de part et d'autre du fuselage ainsi qu'un empennage 10. L'avion 2 comprend en l'espèce deux moteurs principaux 12 portés par les ailes respectives 8 pour la propulsion de l'avion en vol. Il s'agit par exemple de turboréacteurs ou de turbopropulseurs. Les moteurs 12 fonctionnent ici par combustion d'un carburant tel que du kérosène provenant de réservoirs non illustrés de l'avion. A chaque moteur 12 est associé un générateur de courant 18 dont une partie tournante peut être mise en mouvement par le moteur pour produire du courant électrique.

L'avion comprend des trains d'atterrissage comprenant une roulette avant 14 située sous le fuselage et des trains principaux 16, ici au nombre de deux et reliés aux ailes 8 respectives. Chacun des trains principaux 16 comprend des roues 20, par exemple au nombre de deux ou de quatre, ainsi qu'un moteur 22, électrique dans le présent exemple. Le moteur est apte à mettre en rotation les roues du train pour provoquer le roulage de l'avion au sol ou y contribuer.

L'avion 2 comprend un générateur de puissance auxiliaire 24 ou APU, apte au moyen d'un réseau électrique de bord à fournir du courant électrique à différents organes de l'avion tels que des calculateurs de bord et des organes servant au confort des passagers. Il peut ainsi alimenter des organes d'éclairage, des organes de diffusion et de production de sons et d'images, etc. L'APU est en l'espèce connecté électriquement aux moteurs 22 des trains principaux afin d'alimenter ces derniers en courant électrique ou bien de recevoir du courant de leur part lorsqu'ils fonctionnent en générateur. Les générateurs 18 des moteurs principaux 12 sont également connectés électriquement aux moteurs 22 des trains.

Le cockpit 6 est occupé par au moins un pilote et comprend des organes de commande de l'avion. Parmi ceux-ci, on a illustré l'organe 26 qui est connecté à un calculateur de bord 28, lui-même connecté aux moteurs principaux 12 ainsi qu'aux trains principaux 16. Grâce à ces connections, l'organe 26 peut échanger des signaux, des données et des commandes avec le calculateur 28 et ce dernier peut faire de même avec les moteurs principaux 12 et les moteurs 22 des trains.

Sur la figure 2, pour la clarté de la représentation, les connections assurant la transmission d'une puissance électrique sont illustrées en traits pointillés tandis que les connections assurant le transport de commandes, de données et de signaux sont illustrées en traits pleins.

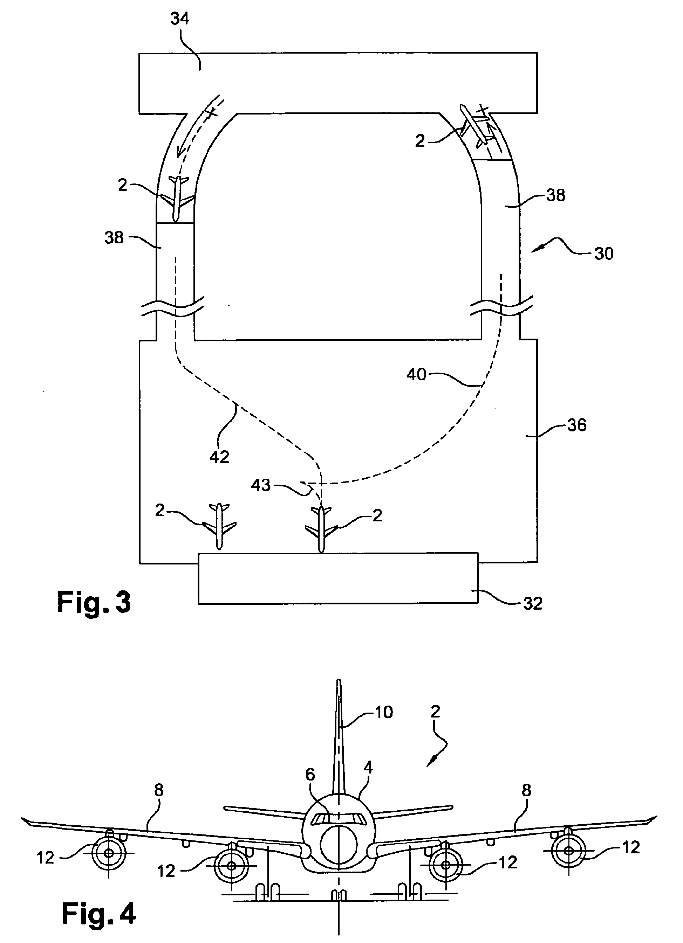

Tous ces différents organes sont adaptés, conçus et dimensionnés pour permettre la mise en oeuvre du procédé qui va être présenté dans la suite. Ce procédé vise à faire rouler l'avion au sol notamment dans une zone aéroportuaire 30 telle que celle illustrée à la figure 3. Cette dernière comprend un aérogare 32 à proximité duquel sont stationnés des avions et servant à la réception de marchandises et/ou de passagers destinés à être embarqués ou débarqués des avions. La zone 30 comprend une piste de décollage et d'atterrissage 34, une zone principale de stationnement 36 et des routes ou taxiways 38 de liaison entre cette zone et la piste 34.

Le procédé ici présenté vise au roulage de l'avion sur la zone 36 et les routes, hors de la piste 34. Ce roulage vise notamment à déplacer l'avion le long d'un trajet 40 depuis son point de stationnement jusqu'à la piste 34, ou encore le long d'un trajet 42 depuis cette dernière jusqu'à son point de stationnement. Il s'agit dans le premier cas du roulage précédent le décollage et dans le deuxième cas du roulage faisant suite à l'atterrissage.

Dans la suite, on fait rouler l'aéronef directement au moyen d'au moins un des moteurs de propulsion en vol 12 et en utilisant simultanément pour le roulage au moins un des moteurs 22 de train et de préférence les deux moteurs 22.

On peut alors utiliser le moteur de train pour le freinage lors du roulage mais le plus souvent on fait rouler l'aéronef directement et simultanément au moyen d'au moins un des moteurs de propulsion 12 et au moyen des moteurs de trains 22, produisant donc tous de la force motrice contribuant au roulage.

### Premier mode de mise en oeuvre

Dans un premier mode de mise en oeuvre de l'invention, on fait rouler l'avion au moyen des deux moteurs de propulsion en vol 12 de l'avion. La poussée fournie par ceux-ci en régime ralenti est déjà significative et permet à elle seule de donner à l'avion la plus grande partie de son accélération pour le roulage, y compris si la masse de l'avion est élevée. Les moteurs de roues 22 apportent un complément de puissance pendant les phases d'amorce du roulage et d'accélération au roulage. Les moteurs de propulsion en vol 12 peuvent rester au ralenti pendant toute l'opération. Pour ne pas augmenter la masse de l'aéronef, les moteurs de roues 22 sont dimensionnés pour fonctionner en conditions nominales, à savoir peu de pente, vent moyen et conditions de roulage classique. Lorsque l'aéronef opère dans des conditions éloignées des conditions nominales, on sollicite les moteurs 12 de façon supplémentaire pour les porter à un régime supérieur à celui du ralenti.

Lorsque la masse de l'aéronef est suffisamment éloignée de la masse maximale, la poussée fournie au roulage par les moteurs principaux 12 au ralenti suffit pour que l'avion accélère de manière continue. Pour contrôler la vitesse de roulage, le pilote est amené à freiner l'aéronef. Plutôt que d'utiliser à cette fin les organe de freinage dédiés 44 agissant sur des roues des trains, le pilote peut utiliser les moteurs de roues 22 en les faisant fonctionner comme générateur. L'énergie ainsi absorbée par les moteurs de roues est transmise au réseau électrique de bord.

Dans ce mode de réalisation, les deux moteurs principaux 12 sont allumés et mettent en mouvement les générateurs électriques et hydrauliques de bord. Sur certains modèles d'aéronefs, par exemple celui désigné par l'appellation « A320 », la puissance totale fournie par cette génération suffit amplement à alimenter tous les systèmes nécessaires pour le roulage et la préparation du vol, et pour alimenter les moteurs de roues 22.

En cas de panne d'un ou de plusieurs des moteurs de roues 22 ou des dispositifs permettant leur alimentation ou leur commande, on peut rendre ce ou ces moteurs de roues inactifs. Les moteurs 12 étant allumés, le pilote peut poursuivre normalement le roulage qui se trouve généré de manière conventionnelle par les seuls moteurs principaux 12. Les risques opérationnels sur la mission de l'avion sont donc très réduits. Par comparaison, si le roulage se déroulait uniquement sous l'effet des moteurs de roues 22, il faudrait dans la même hypothèse rallumer les moteurs 12 pour poursuivre la mission, ce qui se traduirait au mieux par une perte de temps d'au moins quelques minutes. Dans le cas où, en outre, le roulage a lieu au moyen des seuls moteurs de roues 22 alimentés à partir de l'APU, il n'y a pas de redondance dans la génération de puissance. Par conséquent, en cas de panne simple du générateur de l'APU, l'avion se trouve immobilisé et perd son éclairage et une partie de ses moyens de communication. Cela soulève des difficultés opérationnelles puisqu'un véhicule doit venir le chercher et le tracter jusqu'à l'aérogare. De plus, cela représente un risque dans le cas où l'avion roule dans des conditions de visibilité précaires. A l'inverse, dans la situation présente où les moteurs 12 sont allumés au roulage, la génération de courant électrique se fait avec redondance à leur niveau et au niveau du générateur de l'APU. En cas de panne simple, l'avion conserve par conséquent au moins un générateur en fonctionnement. Le pilote peut donc si besoin commander un retour autonome de l'avion à l'aérogare pour réparer la panne ou même démarrer l'APU et poursuivre sa mission si les procédures le permettent.

La puissance à fournir par les moteurs de roues 22 est peu élevée et par exemple de l'ordre de 10 kW. Ce niveau de puissance peut facilement être prélevé sur le réseau électrique de l'aéronef sans modification particulière et sans surdimensionnement des générateurs ou du réseau. Il suffit de mettre en place une ligne d'alimentation depuis le coeur électrique de l'avion vers le module de contrôle des moteurs de roues (formant des modules électroniques de puissance) puis de ces modules vers les moteurs de roues 22. Dans cette utilisation, les générateurs et le réseau électrique ne sont pas surchargés par rapport à une utilisation nominale. L'impact de la mise en oeuvre de l'invention sur leur durée de vie ou le coût de leur maintenance est très limité voire nul.

En variante, on peut mettre en oeuvre l'invention avec des moteurs de roues 22 qui sont non pas électriques mais hydrauliques. La puissance fournie aux moteurs de roues peut alors être prélevée sur le réseau hydraulique de l'avion.

Lors d'une opération de roulage classique à l'aide des seuls moteurs de propulsion en vol 12, la consommation de kérosène est très supérieure à celle des mêmes moteurs au ralenti. Ce surplus de consommation est dû aux phases d'accélération où le pilote doit augmenter la poussée. L'utilisation du système hybride de l'invention permet d'utiliser ces moteurs au ralenti pendant toute la phase de roulage et ainsi de limiter la consommation de carburant.

### Deuxième mode de mise en oeuvre

Nous présentons maintenant, en référence aux mêmes figures 1 à 3, un deuxième mode de mise en oeuvre du procédé de l'invention. Dans ce mode, le roulage est effectué simultanément et directement au moyen d'un seul des moteurs de propulsion en vol 12 et au moyen des moteurs de roues 22 alimentés par l'APU. Ce mode de mise en oeuvre peut nécessiter de rendre les moteurs de roues 22 plus puissants que dans le précédent mode, mais il permet une réduction encore plus notable de la consommation de carburant.

Pour un appareil tel que l'A320, la puissance nécessaire à l'accélération au roulage est alors partagée à peu près pour moitié entre le moteur de propulsion en vol 12 et le couple des moteurs de roues 22.

Pendant la phase de roulage à vitesse constante, la poussée du moteur principal 12 suffit pour des masses peu élevées (par référence au décollage). Elle nécessite un complément de la part des moteurs de roues de l'ordre de 10 à 30 kW pour des masses plus élevées. Le moteur de propulsion en vol 12 reste toujours au ralenti. Quant à l'autre moteur de propulsion en vol 12, il est à l'arrêt ou à tout le moins à un régime dans lequel il ne fournit aucune poussée.

Ce mode est aisé à mettre en oeuvre car il est fréquent que des procédures prévoient déjà la possibilité d'opérer un appareil court ou moyen courrier sur un seul moteur de propulsion en vol 12 lors des phases de roulage. Une telle procédure souffre cependant de deux contraintes majeures, que le mode de fonctionnement hybride ici proposé permet d'éliminer.

La première est que la masse maximale de l'avion pour les opérations effectuées avec un seul moteur principal 12 est fortement limitée. Cela vient du fait que, à masse élevée, le pilote doit fournir une forte poussée pour accélérer. Cette poussée dissymétrique entraîne un couple sur l'avion qui se traduit par des charges latérales inacceptables sur le train avant. Dans le présent mode de mise en oeuvre de l'invention, comme le moteur principal 12 qui est utilisé reste à un régime ralenti, ce phénomène est beaucoup moins sensible, de sorte qu'il n'est pas nécessaire de limiter pareillement la masse maximale..

La deuxième contrainte est liée au fait que, lors des phases d'accélération, le pilote doit fournir sur ce seul moteur 12 la poussée qu'il aurait à fournir avec deux lors d'un roulage conventionnel au moyen des deux propulseurs. La consommation de carburant croît donc beaucoup plus vite que la poussée et donc la surconsommation de carburant liée à l'accélération est beaucoup plus élevée dans le cas du roulage avec un seul moteur 12. Dans le présent mode de mise en oeuvre hybride, le moteur 12 qui est utilisé reste en permanence au ralenti de sorte que la consommation qu'il génère est strictement la moité de celle qui serait associée à deux moteurs 12.

Dans ce mode de mise en oeuvre comme dans le précédent, les moteurs de roues 12 sont dimensionnés comme ils le seraient pour les cas d'utilisation nominale.

De même, on conserve le bénéfice sur l'usure réduite des freins 44 si l'on utilise les moteurs de roue 22 pour freiner l'avion lorsque c'est nécessaire.

On peut envisager dans ce mode de mise en oeuvre que la génération électrique se fait uniquement au moyen du moteur principal allumé 12. Cependant, comme dans le précédent mode de mise en oeuvre, on préfère bénéficier d'une redondance sur la génération électrique et donc opérer l'avion avec l'APU 24 allumée. Ce choix est également conforme à de nombreuses procédures de constructeurs qui prévoient, lors des phases de roulage avec un seul moteur de propulsion en vol 12 et sans motorisation des roues 22, d'avoir l'APU allumée en complément. Le bénéfice en termes de consommation de carburant est certes moindre, mais il reste très significatif dans la mesure où une APU consomme trois à quatre fois moins de carburant (indirectement) en fonction de la charge qu'un moteur au ralenti. La fourniture d'énergie électrique aux organes de l'avion et aux moteurs de roues 22 est ainsi assurée sans difficulté par le réseau de distribution d'énergie de l'avion.

Parmi les différents modes d'alimentation, on privilégie ici celui où les systèmes électriques de l'aéronef (non compris les moteurs de roues) sont alimentés par l'APU, tandis que les moteurs de roues 22 sont alimentés par le seul générateur 18 associé au moteur de propulsion en vol allumé 12. Ce choix permet d'une part d'isoler les moteurs de roues 22 des autres systèmes électriques et ainsi d'éviter tout risque d'interaction électrique lors des différentes phases d'utilisation. Il permet d'autre part de limiter la charge sur le générateur 18 du moteur 12 en service à un niveau qui influence de façon minimale sa durée de vie et ses coûts de maintenance. Dans un tel cas, en cas de panne du générateur APU 24, l'alimentation en électricité venant du générateur 18 peut facilement être réorientée depuis les moteurs de roues 22 vers les autres systèmes de l'aéronef qui en ont besoin. Les générateurs et le réseau électrique ainsi utilisés ne sont pas surchargés par rapport à une utilisation nominale. L'impact sur leur durée de vie ou le coût de leur maintenance est très limité voire nul. On peut toutefois, prévoir d'autres répartitions de l'énergie entre le générateur 18 et l'APU 24.

Ici encore, on peut prévoir en variante que les moteurs de roues sont de type hydrauliques. La situation varie selon le mode de génération de la puissance hydraulique.

Si elle est issue d'une pompe mécanique entraînée par le moteur de propulsion en vol 12, la situation est simple puisque les charges électrique et hydraulique sont séparées. Il suffit donc de s'assurer qu'un débit suffisant est toujours disponible pour les autres fonctions nécessaires au roulage, en particulier le braquage de la roulette du nez et le freinage au moyen des freins 44.

Si la puissance hydraulique est issue d'une pompe électrique alimentée par le réseau de l'avion, on se retrouve dans un cas similaire à la solution électrique. Il n'est pas possible cependant de séparer les alimentations des consommateurs classiques de l'avion et des moteurs de roues 22, à moins d'avoir un circuit hydraulique dédié, ce qui est envisageable.

### Autres considérations

Dans chacun de ces modes de mise en oeuvre, pendant le roulage, le calculateur 28 assure de façon automatisée la gestion des commandes vers les moteurs de propulsion en vol 12 et les moteurs de roues 22 pour leur coordination lors du roulage de l'avion. Le calculateur 28 reçoit lui-même des commandes du pilote transmises au moyen de l'organe commun unique 26. Cet organe est utilisé par le pilote pour commander l'accélération du roulage ou son ralentissement, par exemple lors du freinage. Le principe retenu pour cette automatisation consiste à capturer la demande du pilote en termes de commande de déplacement longitudinal, puis de laisser le calculateur dédié 28 choisir la façon la plus appropriée pour réaliser cette commande en minimisant de préférence la consommation de carburant. Pour cela, le calculateur peut tenir compte des paramètres suivants ou commander leur modification :
- un régime du ou des moteurs de propulsion en vol 12, lié à une poussée et à une consommation de carburant ;
- un couple du ou des moteurs de roues 22 lié à une consommation énergétique ;
- un prélèvement de puissance au niveau des générateurs 18 des moteurs principaux ou de l'APU 24, lié à des consommations de carburant ; et
- des limitations du système en termes de fourniture ou d'utilisation de la puissance liées à la capacité de chaque système à fournir la réponse à la commande du pilote.

On pourrait sinon prévoir que le pilote assure lui-même en grande partie la gestion des différents organes pour le roulage au moyen de commandes séparées telles que :
- la manette des gaz pour la poussée des moteurs principaux 12 ;
- les pédales pour l'activation des freins 44 ; et
- un système dédié, par exemple de type « side stick », pour gérer l'accélération ou la décélération par les moteurs de roues 22.

Mais cette solution a pour inconvénient que le pilote n'a pas à sa disposition tous les éléments de décision pour optimiser la gestion des différentes commandes en minimisant la consommation de carburant.

Ainsi, le calculateur 28 a pour charge de traduire l'ordre transmis par le pilote au moyen de l'organe 26 en une ou plusieurs commandes de poussée des moteurs principaux 12, de couple des moteurs de roues 22 ou de freinage par ceux-ci, ou encore par applications des freins 44 si nécessaire.

On fait en sorte que l'utilisation des commandes favorise les moteurs de roues 22 pour les variations de vitesse, que ce soit pour l'accélération ou le ralentissement. Dans le cas où les moteurs de roues ne permettent pas d'atteindre un niveau de performance prédéterminé, le calculateur 28 augmente ou réduit selon les cas la poussée du ou des moteurs de propulsion en vol 12 ou utilise les freins conventionnels 44. Ce principe permet de réduire au mieux la consommation de carburant et l'usure des freins notamment s'ils sont en carbone. On peut prévoir que plusieurs calculateurs assurent les tâches remplies par le calculateur unique 28.

Le calculateur 28 est dotés d'un ou plusieurs microprocesseurs, d'horloges, de mémoires et de moyens adaptés pour l'émission et la réception de signaux notamment de signaux de commande en vue de la mise en oeuvre des étapes précitées. Tout ou partie des étapes précitées sont exécutées ou commandées par le calculateur au moyen d'un ou plusieurs programmes enregistrés sur un support d'enregistrement de données et comprenant des instructions de code aptes à commander l'exécution de ces étapes lorsqu'il est exécuté sur un ordinateur. On peut prévoir la mise à disposition d'un tel programme sur un réseau de télécommunication, notamment en vue de son téléchargement.

Une autre variante de réalisation a été illustrée sur la figure 4 qui concerne notamment les aéronefs longs courriers, qui sont équipés fréquemment de trois ou quatre moteurs principaux 12. L'aéronef 2 est analogue à celui de la figure 1 et s'en différencie principalement par le fait que le nombre de moteurs de propulsion en vol 12 est cette fois de quatre et non plus de deux. Avec cet avion, on peut mettre en oeuvre l'invention suivant le premier mode en assurant le roulage directement et simultanément au moyen des moteurs de roues 22 et de deux au moins des moteurs de propulsion en vol 12. On peut aussi mettre en oeuvre le deuxième mode en assurant le roulage directement et simultanément au moyen des moteurs de roues 22 et d'un seul des moteurs de propulsion en vol 12, l'APU servant également de générateur de courant. L'invention est particulièrement intéressante sur ce type d'appareil puisqu'en fonctionnement classique, il n'est généralement pas possible de réaliser le roulage au moyen d'un seul des moteurs principaux 12.

Dans une autre variante, on peut prévoir que l'invention est mise en oeuvre avec des moteurs de roues 22 de type pneumatique. En effet, l'APU 24 et les moteurs principaux 12 génèrent de la puissance pneumatique sur la majorité des appareils. Moyennant une adaptation du circuit pneumatique de l'aéronef, il peut être envisagé d'utiliser une partie de cette puissance, par exemple celle provenant de l'APU, pour alimenter le système de conditionnement d'air de l'avion et d'en utiliser une autre partie, par exemple celle provenant des moteurs principaux 12, pour alimenter les moteurs de roues 22.

Dans tous ces modes de réalisation et ces variantes, les moteurs de roues 22 restent disponibles pour assurer si besoin le repoussage autonome de l'avion, sans tracteur de repoussage, repoussage visant à le faire reculer pour lui faire quitter son point de stationnement comme illustré sur le tronçon 43 du trajet 40 sur la figure 3. Cette phase de roulage s'effectue en marche arrière par référence à la direction de vol de l'avion tandis que la plus grande partie du roulage tel qu'il a été expliqué plus haut a lieu en marche avant. Lors du repoussage, les moteurs de roues 22 peuvent rester alimentés par l'APU sans avoir à la sur-dimensionner puisque les performances requises restent modestes (par exemple de l'ordre de la dizaine de kW).

On a décrit plus haut des exemples de mise en oeuvre de l'invention avec le ou les moteurs de propulsion en vol fonctionnant au ralenti mais l'invention peut être mise en oeuvre avec ce ou ces moteurs fonctionnant à un autre régime.

## Revendications

1. Aéronef (2) **caractérisé en ce qu'**il comprend :
- au moins un moteur (12) apte à propulser l'aéronef en vol ;
- au moins un moteur (22) de train d'atterrissage (16) ; et
- des moyens automatisés (26, 28) agencés pour commander de faire rouler l'aéronef directement au moyen du moteur de propulsion en vol et d'utiliser simultanément pour le roulage le moteur de train, durant une phase autre qu'une phase de décollage ou d'atterrissage.

2. Aéronef selon la revendication précédente dans lequel les moyens automatisés sont agencés pour commander un freinage par le moteur de train (22) lors du roulage.

3. Aéronef selon au moins l'une quelconque des revendications précédentes, dans lequel les moyens automatisés sont agencés pour commander le roulage directement et simultanément au moyen du moteur de propulsion en vol (12) et du moteur de train (22).

4. Aéronef selon au moins l'une quelconque des revendications précédentes dans lequel les moyens automatisés sont agencés pour commander le roulage au moyen d'au moins deux moteurs de propulsion en vol (12).

5. Aéronef selon la revendication précédente dans lequel les moyens automatisés sont agencés pour commander que les moteurs de propulsion en vol (12) fournissent une puissance pour le roulage supérieure à celle fournie par le moteur de train (22),

6. Aéronef selon la revendication précédente dans lequel les moyens automatisés sont agencés pour commander de garder constante la puissance fournie pour le roulage par le moteur de train (22) tout en commandant d'augmenter la puissance fournie pour le roulage par les moteurs de propulsion en vol (12).

7. Aéronef selon au moins l'une quelconque des revendications 1 à 3 dans lequel l'aéronef comprend au moins deux moteurs de propulsion en vol (12) et les moyens automatisés sont agencés pour commander le roulage directement et simultanément au moyen d'un seul de ces moteurs et du moteur de train (22).

8. Aéronef selon au moins l'une quelconque des revendications précédentes dans lequel les moyens automatisés sont agencés pour commander une alimentation du moteur de train (22), de préférence principalement voire exclusivement, par un générateur de courant (18) du moteur de propulsion en vol (12).

9. Aéronef selon au moins l'une quelconque des revendications précédentes, qui comprend un organe de commande manuelle commun (26) apte à commander le moteur de propulsion en vol (12) et le moteur de train (22) simultanément lors du roulage.

10. Procédé pour faire rouler un aéronef (2), **caractérisé en ce qu'**on fait rouler l'aéronef, hors d'une piste de décollage et/ou d'atterrissage (34), directement au moyen d'au moins un moteur de l'aéronef (12) apte à propulser l'aéronef en vol et en utilisant simultanément pour le roulage au moins un moteur (22) d'un train d'atterrissage (16) de l'aéronef.

## Claims

1. An aircraft (2), **characterized in that** it comprises:
• at least one engine (12) suitable for propelling the aircraft in flight;
• at least one motor (22) for landing gear (16); and
• automatic means (26, 28) arranged to control taxiing of the aircraft directly by means of the flight propulsion engine and simultaneously to make use of the landing gear motor for taxiing, during a stage other than a takeoff or landing stage.

2. An aircraft according to the preceding claim, wherein the automatic means are arranged to control braking by means of the landing gear motor (22) while taxiing.

3. An aircraft according to either preceding claim, wherein the automatic means are arranged to control taxiing directly and simultaneously by means of the flight propulsion engine (12) and of the landing gear motor (22).

4. An aircraft according to any preceding claim, wherein the automatic means are arranged to control taxiing by means of at least two flight propulsion engines (12).

5. An aircraft according to the preceding claim, wherein the automatic means are arranged to control the flight propulsion engines (12) to deliver more power for taxiing than the power delivered by the landing gear motor (22).

6. An aircraft according to the preceding claim, wherein the automatic means are arranged to cause the power delivered for taxiing by the landing gear motor (22) to be kept constant while causing the power delivered for taxiing by the flight propulsion engine (12) to increase.

7. An aircraft according to any one of claims 1 to 3, wherein the aircraft includes at least two flight propulsion engines (12) and the automatic means are arranged to control taxiing directly and simultaneously by means of only one of those engines and of the landing gear motor (22).

8. An aircraft according to any preceding claim, wherein the automatic means are arranged to cause power to be supplied to the landing gear motor (22), preferably mainly or exclusively, via an electricity generator (18) of the flight propulsion engine (12).

9. An aircraft according to any preceding claim, including a common manual control member (26) suitable for controlling the flight propulsion engine (12) and the landing gear motor (22) simultaneously while taxiing.

10. A method of taxiing an aircraft (2), the method being **characterized in that** the taxiing of the aircraft, other than on a runway (34), is driven directly by means of at least one engine (12) of the aircraft suitable for propelling the aircraft in flight while simultaneously using at least one motor (22) of landing gear (16) of the aircraft for taxiing.

## Patentansprüche

1. Luftfahrzeug (2), **dadurch gekennzeichnet, dass** es umfasst:
wenigstens einen Motor (12), der für den Vortrieb des Luftfahrzeugs im Flug dient,
wenigstens einen Motor (22) für ein Fahrwerk (16) und
Automatikeinrichtungen (26, 28), die ausgelegt sind
zum Auslösen eines Rollvorgangs des Luftfahrzeugs direkt mittels des Vortriebsmotors für den Flug und
zum gleichzeitigen Verwenden des Fahrwerkmotors für das Rollen, während einer anderen Phase als der Start- oder Landephase.

2. Luftfahrzeug nach dem vorangehenden Anspruch, bei dem die Automatikeinrichtungen ausgelegt sind, einen Bremsvorgang durch den Fahrwerkmotor (22) beim Rollen auszulösen.

3. Luftfahrzeug nach wenigstens einem der vorangehenden Ansprüche, bei dem die Automatikeinrichtungen ausgelegt sind, den Rollvorgang direkt und gleichzeitig mittels des Vortriebsmotors für den Flug (12) und des Fahrwerkmotors (22) auszulösen.

4. Luftfahrzeug nach wenigstens einem der vorangehenden Ansprüche, bei dem die Automatikeinrichtungen ausgelegt sind, den Rollvorgang mittels wenigstens zweier Vortriebsmotoren (12) für den Flug auszulösen.

5. Luftfahrzeug nach dem vorangehenden Anspruch, bei dem die Automatikeinrichtungen ausgelegt sind, dafür zu sorgen, dass die Vortriebsmotoren (12) für den Flug eine Leistung erbringen, die größer ist als diejenige, die durch den Fahrwerksmotor (22) erbracht wird.

6. Luftfahrzeug nach dem vorangehenden Anspruch, bei dem die Automatikeinrichtungen ausgelegt sind, die Leistung konstant zu halten, die für den Rollvorgang durch den Fahrwerksmotor (22) erbracht wird, indem die Leistung, die für den Rollvorgang durch die Vortriebsmotoren (12) für den Flug erbracht wird, erhöht wird.

7. Luftfahrzeug nach wenigstens einem der Ansprüche 1 bis 3, bei dem das Luftfahrzeug wenigstens zwei Vortriebsmotoren (12) für den Flug umfasst und die Automatikeinrichtungen ausgelegt sind, den Rollvorgang direkt und gleichzeitig mittels eines einzigen unter diesen Motoren und dem Fahrwerksmotor (22) auszulösen.

8. Luftfahrzeug nach wenigstens einem der vorangehenden Ansprüche, bei dem die Automatikeinrichtungen ausgelegt sind, eine Versorgung des Fahrwerksmotors (22) vorzugsweise hauptsächlich oder ausschließlich durch einen Stromgenerator (18) des Vortriebsmotors (12) für den Flug auszulösen.

9. Luftfahrzeug nach wenigstens einem der vorangehenden Ansprüche, das eine gemeinsame manuelle Steuereinrichtung (26) umfasst, die dazu dient, den Vortriebsmotor (12) für den Flug und den Fahrwerksmotor (22) gleichzeitig beim Rollen anzusteuern.

10. Verfahren zum Rollen eines Luftfahrzeugs (2), **dadurch gekennzeichnet, dass** das Luftfahrzeug außerhalb einer Start- und/oder Landepiste (34) direkt mittels wenigstens eines Luftfahrzeugmotors (12) gerollt wird, der dazu dient, das Luftfahrzeug im Flug anzutreiben, unter gleichzeitiger Verwendung zum Rollen des Luftfahrzeugs wenigstens eines Motors (22) eines Fahrwerks (16) des Luftfahrzeugs.
